# EUROPÄISCHE PATENTSCHRIFT

(11) **EP 4 738 033 B1**
(45) Veröffentlichungstag und Bekanntmachung des Hinweises auf die Patenterteilung: **21.10.2026**
(21) Anmeldenummer: 24209752.5
(22) Anmeldetag: 30.10.2024
(51) Int. Cl.: G05B 19/418, B25J 9/16

(54) **VERFAHREN ZUR AUTOMATISIERTEN HANDHABUNG VON WERKSTÜCKEN UND AUTOMATIONSMODUL**
METHOD FOR THE AUTOMATED HANDLING OF WORKPIECES AND AUTOMATION MODULE
PROCÉDÉ DE MANIPULATION AUTOMATISÉE DE PIÈCES ET MODULE D'AUTOMATISATION

(43) Veröffentlichungstag der Anmeldung: 06.05.2026
(73) Patentinhaber: MG Beteiligungsgesellschaft mbH, 73312 Geislingen/Steige (DE)
(72) Erfinder: Grüner, Magnus, 73312 Geislingen/Steige (DE); Grüner, Tobias, 73312 Geislingen/Steige (DE)
(74) Vertreter: Patentanwälte Magenbauer & Kollegen Partnerschaft mbB

(56) Entgegenhaltungen:
- EP-A1- 3 838 806
- DE-A1- 102012 013 029
- DE-A1- 102014 008 523
- DE-A1- 102022 209 788

## Beschreibung

Die Erfindung betrifft ein Verfahren zur automatisierten Handhabung von Werkstücken und ein Automationsmodul.

Die DE 10 2022 209 788 A1 offenbart eine computerimplementierte Methode zum Generieren einer Menge von Bildern, die eine Robotermanipulation zumindest eines stapelbaren Objektes charakterisieren, umfassend: Erhalten von Maßattributdaten eines Arbeitsbereichs in einem Koordinatensystem eines Robotermanipulators, Erhalten von Maß- und/oder Formattributdaten von mindestens einem Objekttyp der Vielzahl stapelbarer Objekte, Erhalten einer anfänglichen Tiefenkarte aus einer Vielzahl von stapelbaren Objekten, die zusammen einen Stapel im Stapelbereich umfassen und unter Verwendung der anfänglichen Tiefenkarte einen Greifvorschlag generieren, unter Verwendung eines Abbildungssystems mit einer Tiefenkamera und einer Bildkamera, wobei die erste Bildteilmenge mindestens eine Tiefenkarte und mindestens ein 2D-Bild des Stapelbereichs umfasst, wobei sich ein stapelbares Objekt bewegt aus oder in einen Ort im Stapelbereich mit Hilfe des Robotermanipulators gemäß dem Greifvorschlag, um so den räumlichen Zustand des Stapelbereichs zu verändern; und Erhalten einer zweiten Bildteilmenge des Stapelbereichs unter Verwendung des Abbildungssystems, wobei die zweite Bildteilmenge auch mindestens eine Tiefenkarte und mindestens ein 2D-Bild des Stapelbereichs im geänderten räumlichen Zustand umfasst.

Die EP 3 838 806 A1 offenbart ein Kommissioniersystem mit einem Roboter mit einem Greifarm zur Entnahme eines Artikels aus einem Quellbehälter mit einem Behälterrand und zur Ablage des Artikels in einen Zielbehälter, einer Kamera zum Erfassen wenigstens des Quellbehälters in einer Draufsicht, und einer Steuerung, die dazu ausgelegt ist, den Greifarm abhängig von den von der Kamera erfassten Bilddaten derart zu steuern, dass der Greifarm den Artikel greift, in einem Anhebevorgang anhebt, über den Zielbehälter führt und in einem Ablagevorgang in den Zielbehälter ablegt. Das Kommissioniersystem umfasst eine im Wesentlichen horizontal ausgerichtete Sensoranordnung zum Erkennen einer Lage einer Unterkante des Artikels während des Anhebevorgangs und die Steuerung ist dazu ausgelegt, wenigstens den Ablagevorgang abhängig von der erkannten Lage der Unterkante des Artikels zu steuern. Dadurch kann der Kommissioniervorgang beschleunigt werden und Schäden an den zu kommissionierenden Artikeln können vermieden werden.

Die DE 10 2014 008 523 A1 offenbart eine Vorrichtung zur automatisierten Entnahme von Bauteilen aus Ladungsträgern, umfassend zumindest einen Roboter, wobei der Roboter zumindest ein Greifwerkzeug zur Entnahme der Bauteile und zumindest eine Verfahreinheit zur Bewegung zumindest des Greifwerkzeugs relativ zu den Ladungsträgern umfasst. Die Vorrichtung weist zumindest eine Abstandserfassungseinheit zur Erfassung eines Abstands zwischen dem Greifwerkzeug und einem Ladungsträger, eine Auswerteeinheit zur Auswertung des von der Abstandserfassungseinheit erfassten Abstands und Erkennung eines innerhalb des Ladungsträgers angeordneten Stapels von Bauteilen anhand des Abstands, zumindest eine Bilderfassungseinheit zur optischen Erfassung des an oberster Position im Ladungsträger befindlichen Bauteils im Nahbereich, eine Bildauswerteeinheit zur Ermittlung von Soll-Koordinaten des Greifwerkzeugs für eine Entnahmeposition aus mittels der Bilderfassungseinheit erfassten Bilddaten und eine mit der Bildauswerteeinheit gekoppelte Steuereinheit zur Steuerung der Verfahreinheit zumindest in Abhängigkeit der ermittelten Soll-Koordinaten auf.

Die DE 10 2012 013 029 A1 offenbart eine Vorrichtung zur automatisierten Handhabung von ungeordneten Werkstücken mit einer Zwischenstation mit einem Ablegebereich zum Ablegen der Werkstücke und einem Entnahmebereich zum Entnehmen der Werkstücke, sowie mit einer Transporteinrichtung zum Transport der ungeordnet auf der Transporteinrichtung angeordneten Werkstücke vom Ablegebereich zum Entnahmebereich, wobei die Transporteinrichtung eine umlaufende Transportstrecke für die Werkstücke aufweist.

Aufgabe der vorliegenden Erfindung ist es, ein Verfahren zur automatisierten Handhabung von Werkstücken und ein Automationsmodul bereitzustellen, die effizient und flexibel sind.

Die Aufgabe wird gelöst durch ein nachstehend angeführtes Verfahren:
Das Verfahren zur automatisierten Handhabung von Werkstücken wird unter Verwendung eines Automationsmoduls mit einem Grundportal, einem Entnahmebereich, einem Ablagebereich, einer an dem Grundportal angeordneten, einen, in eine Schließstellung und in eine Offenstellung versetzbaren, Greifer aufweisenden Robotereinrichtung, einer an dem Grundportal angeordneten, auf den Entnahmebereich gerichteten Kameraeinrichtung und einer Steuereinrichtung durchgeführt.

Das Verfahren weist die folgenden Schritte auf:
Bei Schritt a. wird ein mit einer offenen Oberseite und Außenseiten ausgestatteter Rohteilladungsträger in dem Entnahmebereich bereitgestellt, wobei in dem Rohteilladungsträger mehrere, jeweils einen Greifbereich aufweisende Werkstücke aufgenommen sind, wobei die Werkstücke jeweils mit ihrem Greifbereich in Richtung der Oberseite und ansonsten zufällig in Bezug zueinander und in Bezug zu den Außenseiten angeordnet sind. Bei Schritt b. wird ein Lagebild von dem Rohteilladungsträger und den in dem Rohteilladungsträger angeordneten Werkstücken mittels der Kameraeinrichtung aufgenommen. Bei Schritt c. werden Lageinformationen der Werkstücke in Bezug zueinander und in Bezug auf die Außenseiten unter Berücksichtigung des Lagebildes ermittelt, wobei die Lageinformationen einzelne Positionen der Werkstücke in dem Rohteilladungsträger umfassen. Bei Schritt d. wird ein geeignetes, zu greifendes Werkstück aus den in dem Rohteilladungsträger angeordneten Werkstücken unter Berücksichtigung der Lageinformationen ausgewählt. Bei Schritt e. wird die Robotereinrichtung mittels der Steuereinrichtung durch Übermitteln der Position des ausgewählten Werkstückes angesteuert, sodass der Greifer an das Werkstück herangefahren wird, das Werkstück mittels des Greifers gegriffen wird und das gegriffene Werkstück aus dem Rohteilladungsträger entnommen wird. Bei Schritt f. wird das gegriffene Werkstück an einer Ablageposition abgelegt, die ausgewählt ist aus einer Gruppe von vorbestimmten Ablagepositionen in dem Ablagebereich, wobei an den Ablagepositionen abgelegte Werkstücke gemäß einer vorbestimmt geordneten Anordnung zueinander ausgerichtet sind. Bei der Auswahl eines geeigneten, zu greifenden Werkstückes aus den in dem Rohteilladungsträger angeordneten Werkstücken wird zumindest so lange für einzelne in dem Rohteilladungsträger aufgenommene Werkstücke geprüft, ob ein Prozessstörungsrisiko dahingehend besteht, dass bei dem Entnehmen das betreffende Werkstück mit einem anderen Werkstück und/oder mit einer Außenseite des Rohteilladungsträgers kollidieren würde, bis die Prüfung für ein in dem Rohteilladungsträger aufgenommenes Werkstück ergibt, dass für das geprüfte Werkstück kein Prozessstörungsrisiko besteht, woraufhin dieses Werkstück als das zu greifende Werkstück ausgewählt wird.

Das Automationsmodul kann in einem verarbeitenden Betrieb verwendet werden, insbesondere in einem metallverarbeitenden Betrieb. Mittels dem Automationsmodul beziehungsweise mittels dem erfindungsgemäßen Verfahren ist es möglich, weitestgehend zufällig angeordnete Werkstücke, wie sie beispielsweise dem verarbeitenden Betrieb angeliefert werden, geordnet in dem Ablagebereich abzulegen, das heißt von einer weitestgehend zufälligen Anordnung in eine geordnete Anordnung zu überführen.

Hierdurch kann das genaue Zuführen der Werkstücke zu nachfolgenden Prozessen, beispielsweise zu einem Bearbeitungsprozess, wie einem Zerspanungsprozess, zu einem Montageprozess oder zu einem Logistikprozess, vereinfacht und dadurch die Prozesszeit beziehungsweise Taktzeit reduziert und die Prozesssicherheit erhöht werden. Bei den nachfolgenden Prozessen müssen die Werkstücke nicht mehr aufwendig ausgerichtet werden. Vielmehr können die Werkstücke unmittelbar mit der erforderlichen Ausrichtung den die nachfolgenden Prozesse ausführenden Maschinen zugeführt werden. Hierdurch kann die Bauteilzugänglichkeit und die damit einhergehende Flexibilität erhöht werden.

Bevorzugt werden die vorgenannten Schritte gemäß ihrer Nummerierung aufeinanderfolgend ausgeführt, das heißt zuerst Schritt a., dann Schritt b. und so weiter, wobei Schritt f. als letzter Schritt ausgeführt wird.

Das Grundportal des Automationsmoduls weist mehrere Portalelemente, beispielsweise Portalträger und/oder Portalwände auf. Ein Portalträger ist ein stabartiges Element, beispielsweise ein Balken. Eine Portalwand ist ein flächiges Element. Die Portalelemente sind derart ausgebildet und aneinander befestigt, dass die Robotereinrichtung des Automationsmoduls und die Kameraeinrichtung des Automationsmoduls jeweils an dem Grundportal betriebsbereit angeordnet sind. Das bedeutet, dass das Grundportal einer Bewegung des Greifers, mit dem insbesondere ein Werkstück gegriffen ist, standhält, ohne dass die Positionierung des Greifers oder die Aufnahme des Lagebildes mittels der Kameraeinrichtung beeinträchtigt wird. Dabei ist das Grundportal eingerichtet, den Greifer ohne Verformung des Grundportals beziehungsweise ohne Auslenkung der Portalelemente zueinander zu bewegen.

Der Entnahmebereich des Automationsmoduls ist derart in Bezug auf das Grundportal angeordnet, dass der Greifer zu dem Entnahmebereich bewegbar ist, um ein Werkstück aus dem in dem Entnahmebereich bereitgestellten Rohteilladungsträger zu entnehmen. Der Ablagebereich des Automationsmoduls ist derart in Bezug auf das Grundportal angeordnet, dass der Greifer zu dem Ablagebereich bewegbar ist, um ein Werkstück in dem Ablagebereich abzulegen. Bevorzugt überdeckt das Grundportal den Entnahmebereich und/oder den Ablagebereich. Alternativ ist der Entnahmebereich und/oder der Ablagebereich neben dem Grundportal angeordnet.

Die Robotereinrichtung weist den Greifer auf. Mittels dem Greifer sind Werkstücke greifbar. Um ein Werkstück zu greifen, wird der Greifer an den Greifbereich des zu greifenden Werkstückes herangefahren. Sodann wird der Greifer von einer Offenstellung in eine Schließstellung versetzt. In der Schließstellung ist der Greifer derart gegen den Greifbereich gespannt, dass zwischen dem Greifer und dem Greifbereich und damit dem Werkstück eine formschlüssige und/oder kraftschlüssige Verbindung ausgebildet ist. Insbesondere ist die Verbindung zwischen dem Greifer und dem Werkstück in der Schließstellung so fest, dass das Werkstück nicht von beziehungsweise an dem Greifer abgleitet.

Sollte das Werkstück nicht richtig gegriffen sein, das heißt, dass das Werkstück von beziehungsweise an dem Greifer abgleitet, obwohl sich dieser in der Schließstellung befindet, kann im Sinne eines Nachgreifens vorgesehen sein, dass das Werkstück zwischenzeitlich abgestellt wird, der Greifer in die Offenstellung versetzt wird, der Greifer neu in Bezug auf das Werkstück positioniert wird und dann der Greifer erneut in die Schließstellung versetzt wird. Hierbei kann insbesondere vorgesehen sein, dass ein Lagebild von dem zwischenzeitlich abgestellten Werkstück aufgenommen wird und Lageinformationen des zwischenzeitlich abgestellten Werkstückes unter Berücksichtigung des von dem zwischenzeitlich abgestellten Werkstück aufgenommenen Lagebildes ermittelt werden, wobei diese Lageinformationen die Position des zwischenzeitlich abgestellten Werkstückes umfassen.

Bevorzugt weist die Robotereinrichtung einen Kollisionssensor auf. Der Kollisionssensor ist dazu eingerichtet, eine Kollision des Greifers und/oder eines von dem Greifer gegriffenen Werkstückes mit der Umgebung, insbesondere mit dem Rohteilladungsträger und/oder anderen Werkstücken, zu erfassen. Die Steuereinrichtung kann dazu eingerichtet sein, die Bewegung der Robotereinrichtung im Sinne eines Nothalts zu beenden, falls eine Kollision erfasst wird.

Als Lageinformationen der Werkstücke in Bezug zueinander und in Bezug auf die Außenseiten werden Informationen bezeichnet, die eine entsprechende Anordnung der Werkstücke betreffen, nämlich eine Anordnung der Werkstücke in Bezug zueinander und in Bezug auf den Rohteilladungsträger beziehungsweise dessen Außenseiten. Die Lageinformationen umfassen einzelne Positionen der Werkstücke in dem Rohteilladungsträger.

Die Position des ausgewählten und/oder des nachgegriffenen Werkstückes umfasst jeweils Raumkoordinaten des betreffenden Werkstückes, das heißt Koordinaten in Bezug auf eine x-Achse, in Bezug auf eine senkrecht zu der x-Achse verlaufende y-Achse und in Bezug auf eine senkrecht zu der x-Achse und senkrecht zu der y-Achse verlaufende z-Achse. Die x-Achse und die y-Achse bilden eine horizontale Ebene. Die Kameraeinrichtung ist entlang der z-Achse von dem Entnahmebereich beabstandet. Die Position und damit die Raumkoordinaten werden von der Steuereinrichtung an die Robotereinrichtung übermittelt. Die Robotereinrichtung wird mittels der Steuereinrichtung angesteuert, sodass der Greifer unter Berücksichtigung der Position beziehungsweise der Raumkoordinaten des Werkstückes an das Werkstück herangefahren wird.

Der in dem Entnahmebereich bereitgestellte Rohteilladungsträger dient zum Transport der Werkstücke. Bevorzugt ist der Rohteilladungsträger geeignet, mittels Fahrzeugen transportiert zu werden, insbesondere mittels LKW. Als Werkstücke werden insbesondere metallische Werkstücke verwendet, beispielsweise Gussteile, bei denen Funktionsflächen zu bearbeiten sind.

Der Rohteilladungsträger kann bauteilspezifisch ausgebildet sein. Hierfür kann beispielsweise eine Höhe und/oder eine Grundfläche des Rohteilladungsträgers an eine Höhe in den Rohteilladungsträger aufzunehmender Werkstücke und/oder eine Grundfläche, insbesondere mehrerer, in den Rohteilladungsträger aufzunehmender Werkstücke angepasst sein. Zudem können, insbesondere bauteilspezifische, Einlagen vorgesehen sein, die als Unterlage für die Werkstücke dienen. Die Einlagen können unter und/oder auf einer Lage von Werkstücken angeordnet sein. Die Einlagen können Aussparungen aufweisen, in denen die Werkstücke aufgenommen sind. Die Einlagen können aus Kunststoff gefertigt sein. Ein einzelner Rohteilladungsträger kann mehrlagig mit Werkstücken gefüllt sein. Insbesondere sind dabei einzelne Werkstücklagen jeweils durch eine Einlage voneinander getrennt.

Insbesondere ist der Rohteilladungsträger wiederverwendbar. Beispielsweise ist der Rohteilladungsträger als sogenannte Gitterbox ausgebildet, bei der die Außenseiten jeweils gitterartig, also teilweise offen ausgebildet sind. Alternativ sind die Außenseiten geschlossen ausgebildet. Zudem kann zumindest eine Außenseite gitterartig und zumindest eine andere Außenseite geschlossen ausgebildet sein. Bevorzugt kann der Rohteilladungsträger, wenn dieser entleert wurde, zusammengeklappt werden, um beim Transport von leeren Rohteilladungsträgern Platz zu sparen.

Um den Transport der Rohteilladungsträger effizienter zu gestalten, ist insbesondere vorgesehen, dass mehrere Rohteilladungsträger aufeinander stapelbar sind. Hierzu können die Rohteilladungsträger an den Außenseiten, insbesondere in einem zu der Oberseite angrenzenden Bereich, senkrecht von den Außenseiten abragende Auflageflächen aufweisen, auf denen ein weiterer Rohteilladungsträger abstellbar ist. Durch diese Auflageflächen wird die Öffnung der Oberseite verkleinert, sodass auch die Fläche, über die der Greifer in den Rohteilladungsträger eindringen kann beziehungsweise über die Werkstücke aus dem Rohteilladungsträger entnommen werden können, verkleinert wird. Damit resultieren insbesondere für an zumindest eine Außenseite angrenzende, in dem Rohteilladungsträger aufgenommene Werkstücke Hinterschnitte, für die in Bezug auf die betreffenden Werkstücke bei deren Entnahme aus dem Rohteilladungsträger eine Kollisionsgefahr besteht.

Diese Hinterschnitte beziehungsweise Auflageflächen werden als Teil des Rohteilladungsträgers mit dem Lagebild erfasst und in den ermittelten Lageinformationen widergespiegelt. Bei der Auswahl des geeigneten, zu greifenden Werkstückes werden die Lageinformationen derart berücksichtigt, dass Werkstücke, die aufgrund der Hinterschnitte beziehungsweise Auflageflächen nicht entnehmbar sind, nicht als geeignetes Werkstück ausgewählt werden.

Bei Schritt a. werden die Werkstücke in einer weitestgehend zufälligen Anordnung bereitgestellt. Weitestgehend zufällig bedeutet dabei, dass die Werkstücke jeweils mit ihrem Greifbereich in Richtung der Oberseite und ansonsten zufällig in Bezug zueinander und in Bezug zu den Außenseiten angeordnet sind. Eine ansonsten zufällige Anordnung kann eine Anordnung sein, bei der die Werkstücke gegeneinander verdreht sind, das heißt, dass der Greifer in unterschiedlichen Drehstellungen an die unterschiedlichen Werkstücke herangefahren werden muss, um so in Bezug auf den jeweiligen Greifbereich positioniert zu sein, dass die Werkstücke sicher gegriffen werden können. Zudem kann eine ansonsten zufällige Anordnung beispielsweise eine Anordnung sein, bei der die Werkstücke unterschiedlich weit zu den Außenseiten des Rohteilladungsträgers und/oder zueinander beabstandet sind.

Das bei Schritt b. aufgenommene Lagebild von dem Rohteilladungsträger und den in dem Rohteilladungsträger angeordneten Werkstücken wird mittels der Kameraeinrichtung aufgenommen, die entlang der z-Achse von dem Entnahmebereich beabstandet ist. Hierbei wird ein Lagebild in einer durch die x-Achse und die y-Achse aufgespannten Ebene beziehungsweise in einer Ebene, die parallel zu der durch die x-Achse und die y-Achse aufgespannten Ebene verläuft, aufgenommen. Das so aufgenommene Lagebild ist zumindest zweidimensional.

Bei Schritt c. werden unter Berücksichtigung des zumindest zweidimensionalen Lagebildes Lageinformationen der Werkstücke in Bezug zueinander und in Bezug auf die Außenseiten des Rohteilladungsträgers ermittelt. Die Lageinformationen umfassen einzelne Positionen der Werkstücke in dem Rohteilladungsträger. Dementsprechend kann anhand der Lageinformationen auf die Anordnung der Werkstücke in dem Rohteilladungsträger geschlossen werden.

Bei Schritt d. wird ein geeignetes, zu greifendes Werkstück aus den in dem Rohteilladungsträger angeordneten Werkstücken unter Berücksichtigung der Lageinformationen ausgewählt. Als geeignetes, zu greifendes Werkstück wird ein solches Werkstück ausgewählt, dass mittels dem Greifer greifbar ist, zu dessen Greifbereich der Greifer hinbewegbar ist, und das im gegriffenen Zustand aus dem Rohteilladungsträger entnehmbar ist.

Bei Schritt e. wird dann das ausgewählte Werkstück aus dem Rohteilladungsträger entnommen. Bevorzugt werden bei der Entnahme des gegriffenen Werkstückes aus dem Rohteilladungsträger Bewegungsvorgaben berücksichtigt. Als Bewegungsvorgabe wird eine Vorgabe bezeichnet, die zumindest einen ersten Bewegungsabschnitt des Entnahmevorgangs beziehungsweise der Entnahmebewegung des Werkstückes betrifft und anhand derer das Werkstück mittels der Robotereinrichtung bewegt wird. Beispielsweise kann vorgesehen sein, dass das Werkstück zuerst in einen freien Bereich des Rohteilladungsträgers gekippt wird, bevor das Werkstück in z-Richtung angehoben wird. Insbesondere sind die Bewegungsvorgaben abhängig von der Lageinformation des betreffenden Werkstückes, beispielsweise abhängig davon, ob das Werkstück entlang der z-Achse von einem Hinterschnitt beziehungsweise einer Auflagefläche verdeckt wird.

Bei Schritt f. wird das gegriffene Werkstück geordnet in dem Ablagebereich abgelegt. Bevorzugt sind die Ablagepositionen vorbestimmt. Hierdurch wird eine Ablage von Werkstücken ermöglicht, ohne dass vor der Ablage die entsprechende Ablageposition noch ermittelt werden muss. Ferner bevorzugt werden während des Ablegens Informationen dazu gespeichert, an beziehungsweise auf welcher Ablageposition bereits ein Werkstück abgelegt wurde. Hierdurch kann ausgeschlossen werden, dass unterschiedliche Werkstücke an derselben Ablageposition abgelegt werden.

Weitere die Erfindung fortbildende Merkmale sind Gegenstand der abhängigen Ansprüche mit den nachstehend angeführten Merkmalen:
Vorzugsweise werden die auf das Bereitstellen des Rohteilladungsträgers folgenden Schritte für mehrere unterschiedliche Werkstücke wiederholt ausgeführt, bis in dem Rohteilladungsträger keine Werkstücke mehr enthalten sind. Ist nur noch ein einzelnes Werkstück in dem Rohteilladungsträger angeordnet, wird entsprechend ein Lagebild von dem Rohteilladungsträger und dem einzelnen in dem Rohteilladungsträger angeordneten Werkstück aufgenommen, werden Lageinformationen des Werkstückes lediglich in Bezug auf die Außenseiten des Rohteilladungsträgers ermittelt, wobei die Lageinformationen lediglich eine Position des Werkstückes umfassen, und wird das verbleibende Werkstück als das zu greifende Werkstück ausgewählt. Der Begriff unterschiedliche Werkstücke bezieht sich darauf, dass die genannten Schritte nicht für dasselbe Werkstück wiederholt ausgeführt werden. Dabei können die Werkstücke gleichartig oder unterschiedlich ausgebildet sein. Bevorzugt sind die Werkstücke jedoch gleichartig ausgebildet.

Vorzugsweise werden beim Ermitteln der Lageinformationen der Werkstücke zusätzlich zu dem Lagebild außerdem Konstruktionsdaten der Werkstücke berücksichtigt. Als Konstruktionsdaten sind dabei insbesondere dreidimensionale Außenkonturen beziehungsweise dreidimensionale Außenflächen der Werkstücke zu verstehen. Hierdurch können ausgehend von dem zumindest zweidimensionalen Lagebild, das Informationen in Hinblick auf die x-Achse und y-Achse enthält, außerdem Informationen in Hinblick die z-Achse und damit in Hinblick auf eine dritte Dimension erlangt werden. Solche Informationen werden als Tiefeninformationen bezeichnet. Die anhand des Lagebildes ermittelten Lageinformationen der Werkstücke können somit um die Tiefeninformationen erweitert werden. Dadurch kann das Anfahren der Werkstücke, insbesondere in Bezug auf die z-Achse, vereinfacht werden.

Vorzugsweise werden beim Aufnehmen des Lagebildes von dem Rohteilladungsträger und den in dem Rohteilladungsträger angeordneten Werkstücken mittels der Kameraeinrichtung außerdem Tiefeninformationen erfasst, wobei vorzugsweise die Tiefeninformationen mit Hilfe einer Punktewolke ermittelt werden. Dementsprechend ist die Kameraeinrichtung vorzugsweise dazu ausgebildet, neben den Informationen in Bezug auf die x-Achse und die y-Achse außerdem Tiefeninformationen zu erfassen, das heißt Informationen in Bezug auf die z-Achse. Eine entsprechende Kameraeinrichtung wird als 2,5D-Kameraeinrichtung oder 3D-Kameraeinrichtung bezeichnet. Vorzugsweise wird mit der Kameraeinrichtung eine Punktewolke erfasst. Dabei werden einzelnen Bildpunkten des erfassten Bildes Koordinaten jeweils in Bezug auf die x-Achse, die y-Achse und die z-Achse zugeordnet. Die einzelnen Bildpunkte bilden zusammen die Punktewolke.

Ferner vorzugsweise werden die mittels der ersten Kameraeinrichtung erhaltenen Tiefeninformationen und die anhand der Konstruktionsdaten erhaltenen Tiefeninformationen miteinander verglichen und/oder zueinander ergänzt.

Vorzugsweise wird das gegriffene Werkstück mittels der Robotereinrichtung hin zu einer an dem Grundportal angeordneten Codeerfassungseinrichtung bewegt und wird ein auf dem gegriffenen Werkstück aufgebrachter erster Identifizierungscode mittels der Codeerfassungseinrichtung erfasst. Der erste Identifizierungscode ist bereits auf dem Werkstück vorhanden, bevor dieses in dem Entnahmebereich bereitgestellt wird. Insbesondere kann der erste Identifizierungscode jeweils nach dem Gießen der metallisch ausgebildeten Werkstücke aufgebracht sein. Werden in nach dem Ablegen des Werkstückes in dem Ablagebereich folgenden Prozessen, insbesondere Prüfprozessen, Fehler an dem betreffenden Werkstück festgestellt, kann über den ersten Identifizierungscode nachverfolgt werden, woher das Werkstück stammt beziehungsweise welche Prozesse das Werkstück zuvor durchlaufen hat. Fehler an dem betreffenden Werkstück können beispielsweise Risse in dem Werkstück, nicht tolerierbare Grate an dem Werkstück oder eine ungenügende Oberflächenbeschaffenheit an bestimmten Bereichen des Werkstücks sein.

Vorzugsweise wird mittels einer dem Automationsmodul zugeordneten Bearbeitungseinrichtung unter Berücksichtigung von an die Bearbeitungseinrichtung bereitgestellten Prozessinformationen ein zweiter Identifizierungscode auf das gegriffene Werkstück aufgebracht. Der zweite Identifizierungscode dient insbesondere der Nachverfolgbarkeit des betreffenden Werkstückes innerhalb des verarbeitenden Betriebes. Die Prozessinformationen umfassen insbesondere ein digitales Äquivalent des auf das gegriffene Werkstück aufgebrachten zweiten Identifizierungscodes und bevorzugt ein digitales Äquivalent des ersten Identifizierungscodes des gegriffenen Werkstückes. Hierdurch kann der erste Identifizierungscode mit dem zweiten Identifizierungscode zusammengebracht und abgespeichert werden. Ferner vorzugsweise wird der zweite Identifizierungscode mittels Laser auf das gegriffene Werkstück aufgebracht, insbesondere mittels eines Laserdruckkopfes auf das gegriffene Werkstück aufgedruckt. Für die Dauer des Aufbringens des zweiten Identifizierungscodes auf das gegriffene Werkstück kann das Werkstück zwischenzeitlich abgestellt werden. Hierdurch kann der Greifer zwischenzeitlich ein anderes Werkstück greifen und bewegen.

Vorzugsweise werden die Prozessinformationen in einer Werkstückdatenbank gespeichert. Ferner vorzugsweise werden in der Werkstückdatenbank weitere Prozessinformationen in Bezug auf nachfolgende Prozesse gespeichert. Hierdurch kann anhand der Werkstückdatenbank eindeutig nachvollzogen werden, unter welchen Bedingungen ein spezifisches Werkstück mittels unterschiedlicher Bearbeitungsprozesse bearbeitet wurde.

Erfindungsgemäß wird bei der Auswahl eines geeigneten, zu greifenden Werkstückes aus den in dem Rohteilladungsträger angeordneten Werkstücken zumindest so lange für einzelne in dem Rohteilladungsträger aufgenommene Werkstücke geprüft, ob ein Prozessstörungsrisiko dahingehend besteht, dass bei dem Entnehmen das betreffende Werkstück mit einem anderen Werkstück und/oder mit einer Außenseite des Rohteilladungsträgers kollidieren würde, bis die Prüfung für ein in dem Rohteilladungsträger aufgenommenes Werkstück ergibt, dass für das geprüfte Werkstück kein Prozessstörungsrisiko besteht, woraufhin dieses Werkstück als das zu greifende Werkstück ausgewählt wird. Hierdurch kann das Risiko minimiert werden, dass eine Prozessstörung auftritt.

Eine Prozessstörung kann ein Mitbewegen eines nicht gegriffenen Werkstückes, eine Kollision des gegriffenen Werkstückes mit einem nicht gegriffenen Werkstück, ein Mitbewegen des Rohteilladungsträgers und/oder eine Kollision des gegriffenen Werkstückes mit dem Rohteilladungsträger sein. Für das gegriffene Werkstück hat zumindest die entsprechende Prüfung ergeben, dass kein von der Prüfung erfassbares, von vorhersehbaren Einflüssen beziehungsweise Ereignissen beeinflusstes Prozessstörungsrisiko besteht. Damit kann zwar nicht ausgeschlossen werden, dass tatsächlich eine Prozessstörung auftritt, da auch weitere unvorhergesehene Einflüsse beziehungsweise Ereignisse zu einer Prozessstörung führen können, die nicht Gegenstand der entsprechenden Prüfung sind. Ein solches unvorhergesehenes Ereignis kann beispielsweise sein, dass eine Person in das Automationsmodul eindringt oder dass das Automationsmodul von außen beschädigt wird. Gleichzeitig kann zumindest in Bezug auf vorhersehbare Einflüsse ein Prozessstörungsrisiko ausgeschlossen werden, wodurch das von vorhersehbaren und unvorhersehbaren Einflüssen beziehungsweise Ereignissen beeinflusste tatsächliche Prozessstörungsrisiko minimiert wird.

Vorzugsweise werden bei der Auswahl eines geeigneten, zu greifenden Werkstückes aus den in dem Rohteilladungsträger angeordneten Werkstücken zudem Greifvorgaben berücksichtigt. Insbesondere werden die Greifvorgaben ergänzend zu den Bewegungsvorgaben berücksichtigt. Die Greifvorgaben können werkstückspezifisch sein, das heißt, dass eine Greifvorgabe für ein bestimmtes Werkstück gilt. Die für verschiedene Werkstücke geltenden werkstückspezifischen Greifvorgaben können einander in Bezug auf bestimmte Werkstücke gleichen. Zudem können die Greifvorgaben unikal sein. Greifvorgaben können beispielsweise sein, dass ein betreffendes Werkstück nicht gegriffen werden darf, bevor nicht ein anderes Werkstück aus dem Rohteilladungsträger entnommen wurde oder dass ein betreffendes Werkstück erst gegriffen werden darf, wenn ein bestimmter Bereich des Rohteilladungsträgers frei ist.

Vorzugsweise ist in dem Ablagebereich wenigstens eine Werkstückpalette angeordnet, auf die das gegriffene Werkstück abgelegt wird, wobei insbesondere nachdem die Werkstückpalette vollständig mit Werkstücken bestückt wurde, die Werkstückpalette mittels eines, insbesondere fahrerlosen, Transportsystems aus dem Ablagebereich entfernt wird. Die Werkstückpalette dient insbesondere als Transportmittel für die gemäß der vorbestimmt geordneten Anordnung zueinander ausgerichteten Werkstücke hin zu Maschinen, an denen weitere Prozesse mit den Werkstücken durchgeführt werden. Das Transportsystem ist fahrbar. Die Werkstückpalette wird an dem Transportsystem angeordnet, insbesondere wird die Werkstückpalette auf dem Transportsystem angeordnet. Dies kann dadurch passieren, dass das Transportsystem unter die Werkstückpalette gefahren und anschließend zumindest teilweise angehoben wird, um so die Werkstückpalette anzuheben. Ein fahrerloses Transportsystem ist ein selbstfahrendes Transportsystem, das heißt, dass für dessen Betrieb ein Bedienereingriff nicht erforderlich ist. Alternativ wird die Werkstückpalette manuell aus dem Ablagebereich entfernt.

Bevorzugt ist die Position der Werkstückpalette in dem Ablagebereich indexiert. Das bedeutet, dass die Position der Werkstückpalette in dem Ablagebereich vorbestimmt ist und nicht mehr nach dem Einbringen der Werkstückpalette in den Ablagebereich bestimmt werden muss.

Vorzugsweise wird beim Bereitstellen der Rohteilladungsträger mittels eines, insbesondere fahrerlosen, Transportsystems und/oder mittels eines Beschickungssystems in dem Entnahmebereich positioniert. Ein Beschickungssystem ist ein System, mit dem der Rohteilladungsträger von einer vorbestimmten Position oder einem vorbestimmten Bereich, beispielsweise aus einem LKW, mit dem der Rohteilladungsträger transportiert wurde, zu einer anderen vorbestimmten Position beziehungsweise zu einem anderen vorbestimmten Bereich bewegt werden kann. Als Beschickungssysteme kommen insbesondere ein Förderband und/oder bewegbare Greifer aufweisende Systeme in Betracht.

Die Aufgabe wird ferner gelöst durch ein Automationsmodul mit einem Grundportal, einem Entnahmebereich, einem Ablagebereich, einer an dem Grundportal angeordneten, einen, in eine Schließstellung und in eine Offenstellung versetzbaren, Greifer aufweisenden Robotereinrichtung, einer an dem Grundportal angeordneten, auf den Entnahmebereich gerichteten Kameraeinrichtung und einer Steuereinrichtung, wobei das Automationsmodul dazu eingerichtet ist, ein vorstehend beschriebenes Verfahren auszuführen.

Bevorzugt weist das Grundportal eine zumindest teilweise offene Einlassseite auf, über die der Rohteilladungsträger in das Automationsmodul einführbar ist. Ferner bevorzugt weist das Grundportal eine zumindest teilweise offene Auslassseite auf, über die die Werkstückpalette aus dem Automationsmodul entfernbar ist. Die Einlassseite und/oder die Auslassseite können jeweils durch eine Toreinrichtung verschließbar sein.

Vorzugsweise ist die Steuereinrichtung als speicherprogrammierbare Steuereinrichtung ausgebildet.

Vorzugsweise weist das Grundportal ein außenliegendes erstes Seitenteil, ein zum ersten Seitenteil beabstandetes, außenliegendes zweites Seitenteil und ein auf dem ersten Seitenteil und auf dem zweiten Seitenteil aufliegendes Dachteil auf, wobei die Kameraeinrichtung und/oder die Robotereinrichtung derart an dem Dachteil angeordnet sind, dass diese in einen von dem ersten Seitenteil, dem zweiten Seitenteil und dem Dachteil begrenzten Arbeitsraum hineinhängt/hineinhängen.

Das erste Seitenteil, das zweite Seitenteil und das Dachteil können jeweils aus mehreren Portalträgern und/oder Portalwänden bestehen. Insbesondere ist das erste Seitenteil, das zweite Seitenteil und/oder das Dachteil jeweils zumindest mit einer Portalwand verkleidet. Bevorzugt wird mittels dem ersten Seitenteil, dem zweiten Seitenteil und dem Dachteil ein Gehäuse gebildet, das als äußere Struktur des Automationsmoduls dient.

Bevorzugt weist das Automationsmodul eine Codeerfassungseinrichtung auf. Die Codeerfassungseinrichtung kann an dem ersten Seitenteil, dem zweiten Seitenteil und/oder dem Dachteil befestigt sein.

Vorzugsweise weist das Grundportal ein zwischen dem ersten Seitenteil und dem zweiten Seitenteil angeordnetes drittes Seitenteil auf, das den Arbeitsraum in einen ersten Arbeitsraumbereich und einen zweiten Arbeitsraumbereich unterteilt, wobei zumindest eine Komponente aus der Gruppe: Entnahmebereich, Ablagebereich, Robotereinrichtung, Kameraeinrichtung lediglich dem ersten Arbeitsraumbereich zugeordnet ist, wobei das Automationsmodul ferner zumindest eine weitere, lediglich dem zweiten Arbeitsraumbereich zugeordnete Komponente aus der Gruppe: Entnahmebereich, Ablagebereich, Robotereinrichtung, Kameraeinrichtung aufweist. Insbesondere sind in dem ersten Arbeitsraumbereich und dem zweiten Arbeitsraumbereich jeweils ein Entnahmebereich und ein Ablagebereich vorgesehen. Alternativ können in dem Arbeitsraum jeweils zwei oder noch mehr Entnahmebereiche und/oder Ablagebereiche vorgesehen sein, ohne dass der Arbeitsraum in einen ersten Arbeitsraumbereich und einen zweiten Arbeitsraumbereich unterteilt ist. Hierdurch können aus zumindest zwei Rohteilladungsträgern, von denen der eine Rohteilladungsträger dem ersten Arbeitsraumbereich zugeordnet ist und der andere Rohteilladungsträger dem zweiten Arbeitsraumbereich, parallel Werkstücke entnommen werden. Ferner vorzugsweise kann die Codeerfassungseinrichtung lediglich dem ersten Arbeitsraumbereich zugeordnet sein, wobei das Automationsmodul ferner eine weitere Codeerfassungseinrichtung aufweist, die lediglich dem zweiten Arbeitsraumbereich zugeordnet ist.

Vorzugsweise weist der Greifer einen Expansionskopf auf, der in der Offenstellung einen kleineren Außenumfang aufweist als in der Schließstellung, wobei der Greifer dazu eingerichtet ist, ein Werkstück dadurch zu greifen, dass der Expansionskopf in der Schließstellung gegen eine Innenkontur des Werkstückes drückt. Hierdurch können Werkstücke gegriffen werden, die mit geringem Abstand zueinander in dem Rohteilladungsträger angeordnet sind. Dies wäre nicht oder lediglich erschwert möglich, wenn ein Greifer verwendet werden würde, der einen Greifkopf aufweist, mit dem das betreffende Werkstück von außen gegriffen wird. Der Greifer mit Expansionskopf kann dadurch vom Werkstück entfernt werden, dass der Greifkopf in der Offenstellung nicht mehr gegen die Innenkontur drückt. Voraussetzung dafür, dass ein Werkstück mittels einem Greifer mit Expansionskopf greifbar ist, ist, dass das Werkstück eine entsprechende Innenkontur aufweist.

Alternativ oder in Ergänzung kann der Greifer einen Parallelgreifkopf aufweisen, bei dem zwei parallel zueinander ausgerichtete Greifflächen relativ zueinander verfahren werden, um das Werkstück zu greifen. Insbesondere ist der Parallelgreifkopf dazu eingerichtet, die Greifflächen aufeinander zuzufahren, um ausgehend von der Offenstellung in die Schließstellung zu gelangen und voneinander wegzufahren, um ausgehend von der Schließstellung in die Offenstellung zu gelangen.

Ferner alternativ oder in Ergänzung kann der Greifer einen Fingergreifkopf aufweisen, der zumindest zwei Greiffinger mit jeweils zumindest zwei Fingergliedern aufweist. Die Greiffinger schmiegen sich an das zu greifende Werkstück an, um den Fingergreifkopf ausgehend von der Offenstellung in die Schließstellung zu versetzen. Um den Fingergreifkopf ausgehend von der Schließstellung in die Offenstellung zu versetzen, werden die Greiffinger von dem Werkstück weggefahren.

Ferner alternativ oder in Ergänzung kann der Greifer einen Vakuumgreifkopf mit zumindest einem Saugelement aufweisen. Um den Vakuumgreifkopf ausgehend von der Offenstellung in die Schließstellung zu versetzen, wird das Saugelement an das zu greifende Werkstück herangefahren und mit Unterdruck beaufschlagt, um das zu greifende Werkstück anzusaugen. Um den Vakuumgreifkopf ausgehend von der Schließstellung in die Offenstellung zu versetzen, wird die Unterdruckversorgung an das Saugelement beendet.

Nachfolgend wird die Erfindung anhand der beiliegenden Zeichnung näher erläutert und in dieser zeigen
- Fig. 1: ein Automationsmodul in einer isometrischen Ansicht,
- Fig. 2: das in Fig. 1 dargestellte Automationsmodul ohne Portalwände in einer isometrischen Ansicht,
- Fig. 3: ein weiteres Automationsmodul mit einem ersten Arbeitsraumbereich und einem zweiten Arbeitsraumbereich in einer abstrakten Darstellung,
- Fig. 4: eine Codezelle in einer abstrakten Darstellung,
- Fig. 5: einen Rohteilladungsträger, in dem mehrere Werkstücke aufgenommen sind, und
- Fig. 6: ein Verfahren.

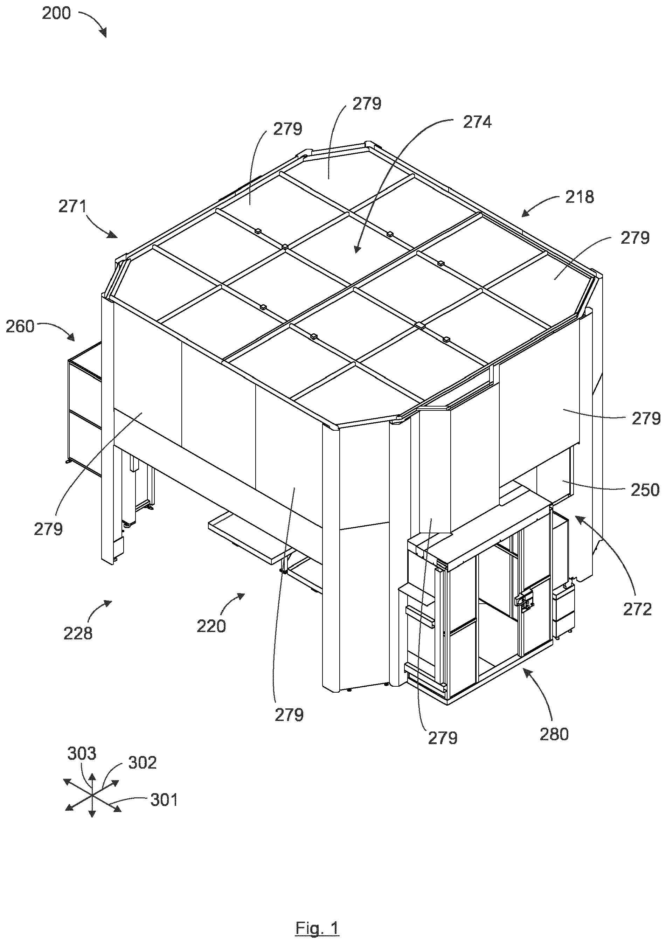

Fig. 1 zeigt ein Automationsmodul 200. Das Automationsmodul 200 erstreckt sich entlang einer x-Achse 301, einer senkrecht zu der x-Achse 301 verlaufenden y-Achse 302 und einer senkrecht zu der x-Achse 301 und senkrecht zu der y-Achse 302 verlaufenden z-Achse 303.

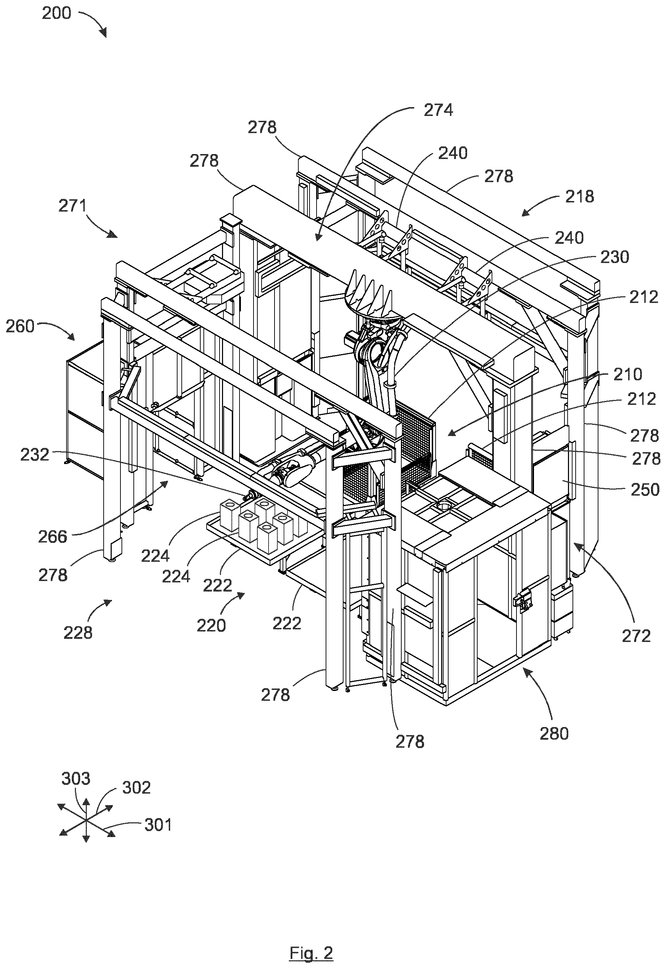

Das Automationsmodul 200 weist ein nicht mit einem Bezugszeichen versehenes Grundportal auf. Das Grundportal weist mehreren Portalelemente auf. Rein exemplarisch weist das Grundportal als Portalwände 279 ausgebildete Portalelemente auf, die an als Portalträgern 278 ausgebildeten Portalelementen angeordnet sind. Fig. 2 zeigt das in Fig. 1 dargestellte Automationsmodul ohne Portalwände 279. In Fig. 2 sind die Portalträger 278 ersichtlich, an denen die Portalwände angeordnet beziehungsweise befestigt sind.

Das Automationsmodul 200 weist ferner einen Entnahmebereich 210 und einen Ablagebereich 220 auf. Zudem weist das Automationsmodul 200 eine Robotereinrichtung 230 auf. Die Robotereinrichtung 230 weist einen in eine Schließstellung und in eine Offenstellung versetzbaren Greifer 232 auf. Weiterhin weist das Automationsmodul 200 eine an dem Grundportal angeordnete, auf den Entnahmebereich 210 gerichtete Kameraeinrichtung 240 und eine Steuereinrichtung 250 auf.

Rein exemplarisch weist das Grundportal ein außenliegendes erstes Seitenteil 271, ein zum ersten Seitenteil 271 beabstandetes, außenliegendes zweites Seitenteil 272 und ein auf dem ersten Seitenteil 271 und auf dem zweiten Seitenteil 272 aufliegendes Dachteil 274 auf. Dabei sind die Kameraeinrichtung 240 und die Robotereinrichtung 230 derart an dem Dachteil 274 angeordnet, dass diese in einen von dem ersten Seitenteil 271, dem zweiten Seitenteil 272 und dem Dachteil 274 begrenzten, nicht mit einem Bezugszeichen versehenen Arbeitsraum hineinhängen.

Das erste Seitenteil 271, das zweite Seitenteil 272 und das Dachteil 274 weisen jeweils mehrere Portalträger 278 und mehrere Portalwände 279 auf. In den Fig. 1 und 2 sind aus Gründen der Übersichtlichkeit jeweils nicht alle sichtbaren Portalträger 278 und Seitenwände 279 mit einem Bezugszeichen versehen. Das Automationsmodul 200 weist eine Einlassseite 218 und eine Auslassseite 228 auf. Die Einlassseite 218 und die Auslassseite 228 sind in Bezug auf die y-Achse 302 auf einander gegenüberliegenden Seiten des Automationsmoduls 200 angeordnet. Über die Einlassseite 218 ist der Entnahmebereich 210 zugänglich.

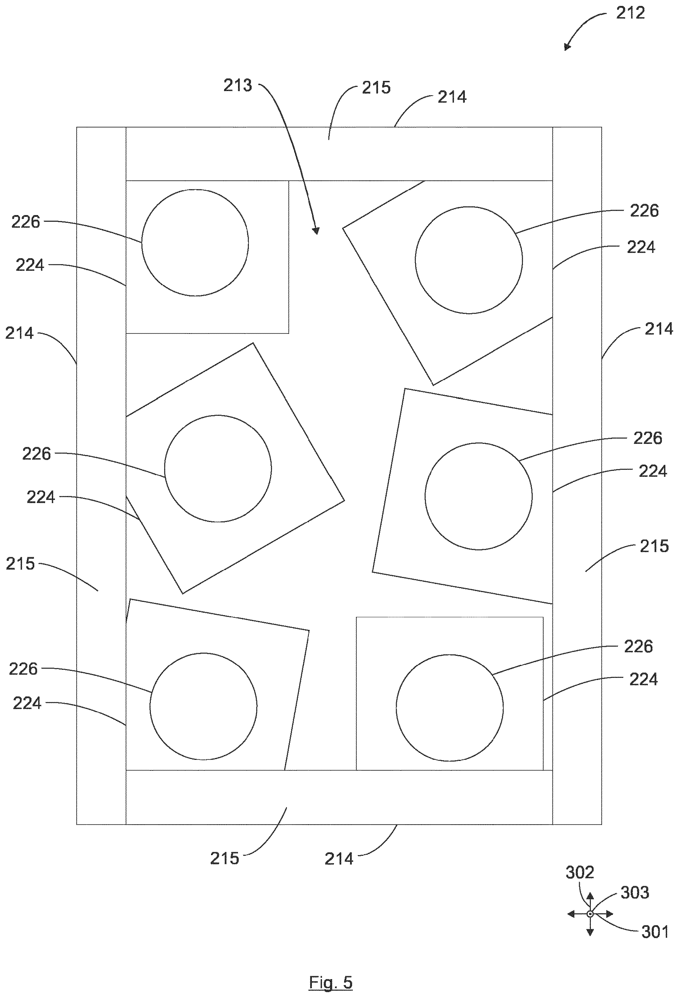

Zudem ist über die Einlassseite 218 ein Rohteilladungsträger 212 in das Automationsmodul 200 einführbar. Rein exemplarisch sind zwei Rohteilladungsträger 212 in das Automationsmodul 200 eingeführt und in dem Entnahmebereich 210 angeordnet. In den Rohteilladungsträgern 212 sind jeweils Werkstücke 224 aufnehmbar (vgl. Fig. 5). Die Werkstücke 224 werden in dem Rohteilladungsträger 212 beziehungsweise in den Rohteilladungsträgern 212 bereitgestellt.

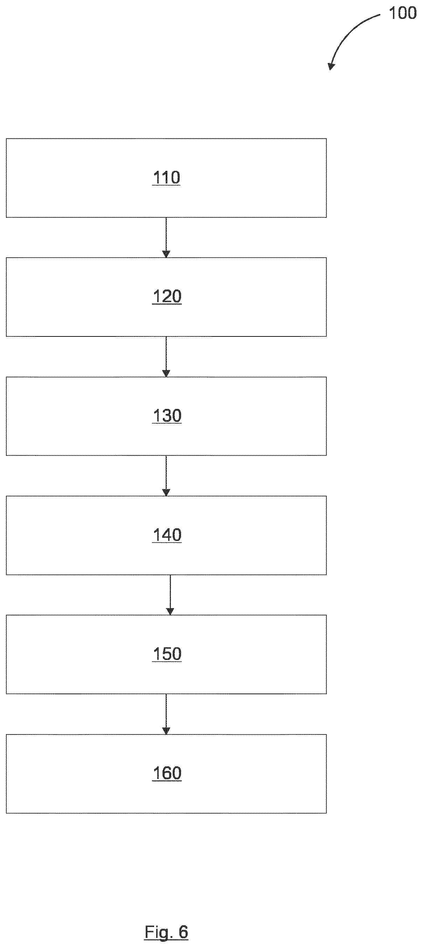

Mittels der Robotereinrichtung 230 sind im Zuge eines in Fig. 6 dargestellten Verfahrens 100 die Werkstücke 224 aus dem Rohteilladungsträger 212 beziehungsweise aus den Rohteilladungsträgern 212 entnehmbar und auf der Werkstückpalette 222 beziehungsweise auf den Werkstückpaletten 222 ablegbar.

Über die Auslassseite 228 ist der Ablagebereich 220 zugänglich. Zudem ist über die Auslassseite 228 eine Werkstückpalette 222 aus dem Automationsmodul 200 entfernbar. Rein exemplarisch sind zwei Werkstückpaletten 222 in das Automationsmodul 200 eingeführt und in dem Ablagebereich 220 angeordnet. In den Werkstückpaletten 222 sind jeweils Werkstücke 224 ablegbar. In Fig. 2 sind auf der in der Darstellung links angeordneten Werkstückpalette 222 mehrere Werkstücke 224 abgelegt.

Rein exemplarisch ist das Automationsmodul 200 abgesehen von der Einlassseite 218 und der Auslassseite 228 vollständig mit Portalwänden 279 verkleidet. Die Einlassseite 218 und die Auslassseite 228 sind jeweils nur teilweise mit Portalwänden 279 verkleidet und dementsprechend jeweils teilweise offen.

Rein exemplarisch weist das Automationsmodul 200 ferner eine Codezelle 260 und eine Zuführeinrichtung 280 auf. Mittels der Zuführeinrichtung 280 können dem Automationsmodul 200 unabhängig von einem Rohteilladungsträger 212 weitere Werkstücke 224 zugeführt werden.

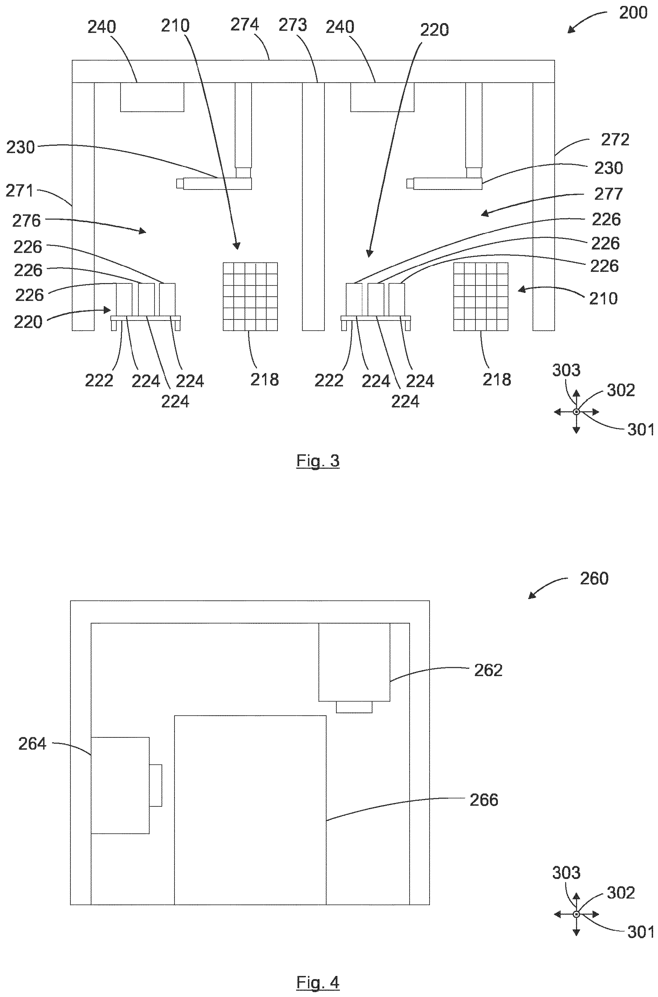

Fig. 3 zeigt ein weiteres Automationsmodul 200. Das in Fig. 3 dargestellte Automationsmodul 200 weist im Unterschied zu dem in den Fig. 1 und 2 dargestellte Automationsmodul 200 ein drittes Seitenteil 273 auf. Das dritte Seitenteil 273 ist in Bezug auf die x-Achse 301 zwischen dem ersten Seitenteil 271 und dem zweiten Seitenteil 272 angeordnet. Das dritte Seitenteil 273 unterteilt den Arbeitsraum in einen ersten Arbeitsraumbereich 276 und einen zweiten Arbeitsraumbereich 277.

Rein exemplarisch weist das Automationsmodul 200 einen Entnahmebereich 210, einen Ablagebereich 220, eine Robotereinrichtung 230 und eine Kameraeinrichtung 240 auf, die jeweils lediglich dem ersten Arbeitsraumbereich 276 zugeordnet sind.

Ferner exemplarisch weist das Automationsmodul 200 einen weiteren Entnahmebereich 210, einen weiteren Ablagebereich 220, eine weitere Robotereinrichtung 230 und eine weitere Kameraeinrichtung 240 auf, die jeweils lediglich dem zweiten Arbeitsraumbereich 277 zugeordnet sind.

Das in Zusammenhang mit den Fig. 1 und 2 zu dem Entnahmebereich 210, dem Ablagebereich 220, der Robotereinrichtung 230 und der Kameraeinrichtung 240 Beschriebene gilt für die in Fig. 3 dargestellten Entnahmebereiche 210, Ablagebereiche 220, Robotereinrichtungen 230 und Kameraeinrichtungen 240 in gleicher Weise.

Fig. 4 zeigt die Codezelle 260 des in den Fig. 1 und 2 dargestellten Automationsmoduls 200. Rein exemplarisch weist die Codezelle 260 eine Zugangsöffnung 266 auf (vgl. Fig. 2), über die die Codezelle 260 ausgehend von dem Arbeitsraum zugänglich ist. Insbesondere kann der Greifer 232 über die ZugangsÖffnung 266 in die Codezelle 260 einfahren. Ferner exemplarisch weist die Codezelle 260 eine Codeerfassungseinrichtung 262 und eine Bearbeitungseinrichtung 264 auf.

Fig. 5 zeigt einen Rohteilladungsträger 212, in dem mehrere Werkstücke 224 aufgenommen sind. Der Rohteilladungsträger 212 weist eine offene Oberseite 213 und rein exemplarisch vier Außenseiten 214 auf. Ferner exemplarisch erstreckt sich die Oberseite 213 in einer durch die x-Achse 301 und die y-Achse 302 aufgespannten Ebene beziehungsweise in einer Ebene, die parallel zu der durch die x-Achse 301 und die y-Achse 302 aufgespannten Ebene verläuft. Die in Fig. 5 auf der linken und auf der rechten Seite dargestellten Außenseiten 214 erstrecken sich in einer durch die y-Achse 302 und die z-Achse 303 aufgespannten Ebene beziehungsweise in einer Ebene, die parallel zu der durch die y-Achse 302 und die z-Achse 303 aufgespannten Ebene verläuft. Die in Fig. 5 oben und unten dargestellten Außenseiten 214 erstrecken sich in einer durch die x-Achse 301 und die z-Achse 303 aufgespannten Ebene beziehungsweise in einer Ebene, die parallel zu der durch die x-Achse 301 und die z-Achse 303 aufgespannten Ebene verläuft.

Die Werkstücke 224 weisen jeweils einen Greifbereich 226 auf. Die Werkstücke 224 sind jeweils derart in dem Rohteilladungsträger 212 angeordnet, dass die Greifbereiche 226 in Richtung der Oberseite 213 weisen. Ansonsten sind die Werkstücke 224 zufällig in Bezug zueinander und in Bezug zu den Außenseiten 214 angeordnet.

Rein exemplarisch weist der Rohteilladungsträger 212 an den Außenseiten 214 senkrecht von den Außenseiten 214 abragende Auflageflächen 215 auf. Durch die Auflageflächen 215 wird die Öffnung der Oberseite 213 verkleinert.

Ferner exemplarisch sind die Greifbereiche 226 der einzelnen Werkstücke 224 jeweils in Bezug auf das betreffende Werkstück 224 innenliegend angeordnet. Um solche Werkstücke 224 zu greifen, kann der Greifer 232 einen Expansionskopf aufweisen, der in der Offenstellung einen kleineren Außenumfang aufweist als in der Schließstellung. Ein solcher Greifer 232 ist dazu eingerichtet, ein Werkstück 224 dadurch zu greifen, dass der Expansionskopf in der Schließstellung gegen eine, insbesondere durch den Greifbereich 226 bestimmte, Innenkontur des Werkstückes 224 drückt.

Fig. 6 zeigt ein Verfahren 100. Das Verfahren 100 weist sechs Schritte a. bis f. 110, 120, 130, 140, 150, 160 auf, die rein exemplarisch aufeinander folgen. Das Verfahren 100 wird unter Verwendung des vorstehend beschriebenen Automationsmoduls 200 durchgeführt.

Bei Schritt a. 110 wird ein mit einer offenen Oberseite 213 und Außenseiten 214 ausgestatteter Rohteilladungsträger 212 in dem Entnahmebereich 210 bereitgestellt, wobei in dem Rohteilladungsträger 212 mehrere, jeweils einen Greifbereich 226 aufweisende Werkstücke 224 aufgenommen sind, wobei die Werkstücke 224 jeweils mit ihrem Greifbereich 226 in Richtung der Oberseite 213 und ansonsten zufällig in Bezug zueinander und in Bezug zu den Außenseiten 214 angeordnet sind.

Bei Schritt b. 120 wird ein Lagebild von dem Rohteilladungsträger 212 und den in dem Rohteilladungsträger 212 angeordneten Werkstücken 224 mittels der Kameraeinrichtung 240 aufgenommen.

Bei Schritt c. 130 werden Lageinformationen der Werkstücke 224 in Bezug zueinander und in Bezug auf die Außenseiten 214 unter Berücksichtigung des Lagebildes ermittelt, wobei die Lageinformationen einzelne Positionen der Werkstücke 224 in dem Rohteilladungsträger 212 umfassen.

Bei Schritt d. 140 wird ein geeignetes, zu greifendes Werkstück 224 aus den in dem Rohteilladungsträger 212 angeordneten Werkstücken 224 unter Berücksichtigung der Lageinformationen ausgewählt.

Bei Schritt e. 150 wird die Robotereinrichtung 230 mittels der Steuereinrichtung 250 durch Übermitteln der Position des ausgewählten Werkstückes 224 angesteuert, sodass der Greifer 232 an das Werkstück 224 herangefahren wird, das Werkstück 224 mittels des Greifers 232 gegriffen wird und das gegriffene Werkstück 224 aus dem Rohteilladungsträger 212 entnommen wird.

Bei Schritt f. 160 wird das gegriffene Werkstück 224 an einer Ablageposition abgelegt, die ausgewählt ist aus einer Gruppe von vorbestimmten Ablagepositionen in dem Ablagebereich 220, wobei an den Ablagepositionen abgelegte Werkstücke 224 gemäß einer vorbestimmt geordneten Anordnung zueinander ausgerichtet sind.

## Patentansprüche

1. Verfahren (100) zur automatisierten Handhabung von Werkstücken (224) unter Verwendung eines Automationsmoduls (200), mit einem Grundportal, einem Entnahmebereich (210), einem Ablagebereich (220), einer an dem Grundportal angeordneten, einen, in eine Schließstellung und in eine Offenstellung versetzbaren, Greifer (232) aufweisenden Robotereinrichtung (230), einer an dem Grundportal angeordneten, auf den Entnahmebereich (210) gerichteten Kameraeinrichtung (240) und einer Steuereinrichtung (250), wobei das Verfahren (100) folgende Schritte aufweist:
a. Bereitstellen eines mit einer offenen Oberseite (213) und Außenseiten (214) ausgestatteten Rohteilladungsträgers (212) in dem Entnahmebereich (210), wobei in dem Rohteilladungsträger (212) mehrere, jeweils einen Greifbereich (226) aufweisende Werkstücke (224) aufgenommen sind, wobei die Werkstücke (224) jeweils mit ihrem Greifbereich (226) in Richtung der Oberseite (213) und ansonsten zufällig in Bezug zueinander und in Bezug zu den Außenseiten (214) angeordnet sind,
b. Aufnehmen eines Lagebildes von dem Rohteilladungsträger (212) und den in dem Rohteilladungsträger (212) angeordneten Werkstücken (224) mittels der Kameraeinrichtung (240),
c. Ermitteln von Lageinformationen der Werkstücke (224) in Bezug zueinander und in Bezug auf die Außenseiten (214) unter Berücksichtigung des Lagebildes, wobei die Lageinformationen einzelne Positionen der Werkstücke (224) in dem Rohteilladungsträger (212) umfassen,
d. Auswahl eines geeigneten, zu greifenden Werkstückes (224) aus den in dem Rohteilladungsträger (212) angeordneten Werkstücken (224) unter Berücksichtigung der Lageinformationen,
e. Ansteuern der Robotereinrichtung (230) mittels der Steuereinrichtung (250) durch Übermitteln der Position des ausgewählten Werkstückes (224), sodass der Greifer (232) an das Werkstück (224) herangefahren wird, das Werkstück (224) mittels des Greifers (232) gegriffen wird und das gegriffene Werkstück (224) aus dem Rohteilladungsträger (212) entnommen wird,
f. Ablegen des gegriffenen Werkstückes (224) an einer Ablageposition, die ausgewählt ist aus einer Gruppe von vorbestimmten Ablagepositionen in dem Ablagebereich (220), wobei an den Ablagepositionen abgelegte Werkstücke (224) gemäß einer vorbestimmt geordneten Anordnung zueinander ausgerichtet sind,
**dadurch gekennzeichnet, dass** bei der Auswahl eines geeigneten, zu greifenden Werkstückes (224) aus den in dem Rohteilladungsträger (212) angeordneten Werkstücken (224) zumindest so lange für einzelne in dem Rohteilladungsträger (212) aufgenommene Werkstücke (224) geprüft wird, ob ein Prozessstörungsrisiko dahingehend besteht, dass bei dem Entnehmen das betreffende Werkstück (224) mit einem anderen Werkstück (224) und/oder mit einer Außenseite (214) des Rohteilladungsträgers (212) kollidieren würde, bis die Prüfung für ein in dem Rohteilladungsträger (212) aufgenommenes Werkstück (224) ergibt, dass für das geprüfte Werkstück (224) kein Prozessstörungsrisiko besteht, woraufhin dieses Werkstück (224) als das zu greifende Werkstück (224) ausgewählt wird.

2. Verfahren (100) nach Anspruch 1, **dadurch gekennzeichnet, dass** die auf das Bereitstellen des Rohteilladungsträgers (212) folgenden Schritte für mehrere unterschiedliche Werkstücke (224) wiederholt ausgeführt werden, bis in dem Rohteilladungsträger (212) keine Werkstücke (224) mehr enthalten sind.

3. Verfahren (100) nach einem der vorhergehenden Ansprüche, **dadurch gekennzeichnet, dass** beim Ermitteln der Lageinformationen der Werkstücke (224) zusätzlich zu dem Lagebild außerdem Konstruktionsdaten der Werkstücke (224) berücksichtigt werden.

4. Verfahren (100) nach einem der vorhergehenden Ansprüche, **dadurch gekennzeichnet, dass** beim Aufnehmen des Lagebildes von dem Rohteilladungsträger (212) und den in dem Rohteilladungsträger (212) angeordneten Werkstücken (224) mittels der Kameraeinrichtung (240) außerdem Tiefeninformationen erfasst werden, wobei vorzugsweise die Tiefeninformationen mit Hilfe einer Punktewolke ermittelt werden.

5. Verfahren (100) nach einem der vorhergehenden Ansprüche, **dadurch gekennzeichnet, dass** das gegriffene Werkstück (224) mittels der Robotereinrichtung (230) hin zu einer an dem Grundportal angeordneten Codeerfassungseinrichtung (262) bewegt wird und ein auf dem gegriffenen Werkstück (224) aufgebrachter erster Identifizierungscode mittels der Codeerfassungseinrichtung (262) erfasst wird.

6. Verfahren (100) nach einem der vorhergehenden Ansprüche, **dadurch gekennzeichnet, dass** mittels einer dem Automationsmodul (200) zugeordneten Bearbeitungseinrichtung (264) unter Berücksichtigung von an die Bearbeitungseinrichtung (264) bereitgestellten Prozessinformationen ein zweiter Identifizierungscode auf das gegriffene Werkstück (224) aufgebracht wird.

7. Verfahren (100) nach Anspruch 6, **dadurch gekennzeichnet, dass** die Prozessinformationen in einer Werkstückdatenbank gespeichert werden.

8. Verfahren (100) nach einem der vorhergehenden Ansprüche, **dadurch gekennzeichnet, dass** bei der Auswahl eines geeigneten, zu greifenden Werkstückes (224) aus den in dem Rohteilladungsträger (212) angeordneten Werkstücken (224) zudem Greifvorgaben berücksichtigt werden.

9. Verfahren (100) nach einem der vorhergehenden Ansprüche, **dadurch gekennzeichnet, dass** in dem Ablagebereich (220) wenigstens eine Werkstückpalette (222) angeordnet ist, auf die das gegriffene Werkstück (224) abgelegt wird, wobei insbesondere nachdem die Werkstückpalette (222) vollständig mit Werkstücken (224) bestückt wurde, die Werkstückpalette (222) mittels eines, insbesondere fahrerlosen, Transportsystems aus dem Ablagebereich (220) entfernt wird.

10. Verfahren (100) nach einem der vorhergehenden Ansprüche, **dadurch gekennzeichnet, dass** beim Bereitstellen der Rohteilladungsträger (212) mittels eines, insbesondere fahrerlosen, Transportsystems und/oder mittels eines Beschickungssystems in dem Entnahmebereich (210) positioniert wird.

11. Automationsmodul (200) mit einem Grundportal, einem Entnahmebereich (210), einem Ablagebereich (220), einer an dem Grundportal angeordneten, einen, in eine Schließstellung und in eine Offenstellung versetzbaren, Greifer (232) aufweisenden Robotereinrichtung (230), einer an dem Grundportal angeordneten, auf den Entnahmebereich (210) gerichteten Kameraeinrichtung (240) und einer Steuereinrichtung (250), wobei das Automationsmodul (200) dazu eingerichtet ist, ein Verfahren (100) nach einem der vorhergehenden Ansprüche auszuführen.

12. Automationsmodul (200) nach Anspruch 11, **dadurch gekennzeichnet, dass** das Grundportal ein außenliegendes erstes Seitenteil (271), ein zum ersten Seitenteil (271) beabstandetes, außenliegendes zweites Seitenteil (272) und ein auf dem ersten Seitenteil (271) und auf dem zweiten Seitenteil (272) aufliegendes Dachteil (274) aufweist, wobei die Kameraeinrichtung (240) und/oder die Robotereinrichtung (230) derart an dem Dachteil (274) angeordnet sind, dass diese in einen von dem ersten Seitenteil (271), dem zweiten Seitenteil (272) und dem Dachteil (274) begrenzten Arbeitsraum hineinhängt/hineinhängen.

13. Automationsmodul (200) nach Anspruch 12, **gekennzeichnet durch** ein zwischen dem ersten Seitenteil (271) und dem zweiten Seitenteil (272) angeordnetes drittes Seitenteil (273), das den Arbeitsraum in einen ersten Arbeitsraumbereich (276) und einen zweiten Arbeitsraumbereich (277) unterteilt, wobei zumindest eine Komponente aus der Gruppe: Entnahmebereich (210), Ablagebereich (220), Robotereinrichtung (230), Kameraeinrichtung (240) lediglich dem ersten Arbeitsraumbereich (276) zugeordnet ist, wobei das Automationsmodul (200) ferner zumindest eine weitere, lediglich dem zweiten Arbeitsraumbereich (277) zugeordnete Komponente aus der Gruppe: Entnahmebereich (210), Ablagebereich (220), Robotereinrichtung (230), Kameraeinrichtung (240) aufweist.

## Claims

1. Method (100) for the automated handling of workpieces (224) using an automation module (200), having a base portal, a removal area (210), a placement area (220), a robot device (230) arranged on the base portal and having a gripper (232) displaceable into a closed position and into an open position, a camera device (240) arranged on the base portal and directed toward the removal area (210), and a control device (250), wherein the method (100) comprises the following steps:
a. providing a raw-part load carrier (212) provided with an open top side (213) and outer sides (214) in the removal area (210), wherein a plurality of workpieces (224), each having a gripping region (226), are received in the raw-part load carrier (212), wherein the workpieces (224) are each arranged with their gripping region (226) in the direction of the top side (213) and otherwise randomly with respect to one another and with respect to the outer sides (214),
b. capturing a positional image of the raw-part load carrier (212) and the workpieces (224) arranged in the raw-part load carrier (212) by means of the camera device (240),
c. determining positional information of the workpieces (224) with respect to one another and with respect to the outer sides (214) taking into account the positional image, wherein the positional information comprises individual positions of the workpieces (224) in the raw-part load carrier (212),
d. selecting a suitable workpiece (224) to be gripped from the workpieces (224) arranged in the raw-part load carrier (212) taking into account the positional information,
e. controlling the robot device (230) by means of the control device (250) by transmitting the position of the selected workpiece (224), so that the gripper (232) is moved up to the workpiece (224), the workpiece (224) is gripped by means of the gripper (232), and the gripped workpiece (224) is removed from the raw-part load carrier (212),
f. depositing the gripped workpiece (224) at a placement position which is selected from a group of predetermined placement positions in the placement area (220), wherein workpieces (224) deposited at the placement positions are aligned relative to one another in accordance with a predetermined orderly arrangement,
**characterized in, that** during the selection of a suitable workpiece (224) to be gripped from the workpieces (224) arranged in the raw-part load carrier (212), it is checked for individual workpieces (224) received in the raw-part load carrier (212) at least until the check for a workpiece (224) received in the raw-part load carrier (212) results **in that** there is no risk of process disruption for the checked workpiece (224), whether a risk of process disruption exists to the effect that during removal the workpiece (224) in question would collide with another workpiece (224) and/or with an outer side (214) of the raw-part load carrier (212), whereupon this workpiece (224) is selected as the workpiece (224) to be gripped.

2. Method (100) according to claim 1, **characterized in that** the steps following the providing of the raw-part load carrier (212) are carried out repeatedly for a plurality of different workpieces (224) until no more workpieces (224) are contained in the raw-part load carrier (212).

3. Method (100) according to one of the preceding claims, **characterized in that** when determining the positional information of the workpieces (224), design data of the workpieces (224) are additionally taken into account in addition to the positional image.

4. Method (100) according to one of the preceding claims, **characterized in that** when capturing the positional image of the raw-part load carrier (212) and the workpieces (224) arranged in the raw-part load carrier (212) by means of the camera device (240), depth information is also acquired, wherein the depth information is preferably determined by means of a point cloud.

5. Method (100) according to one of the preceding claims, **characterized in that** the gripped workpiece (224) is moved by means of the robot device (230) toward a code capturing device (262) arranged on the base portal, and a first identification code applied to the gripped workpiece (224) is acquired by means of the code capturing device (262).

6. Method (100) according to one of the preceding claims, **characterized in that** a second identification code is applied to the gripped workpiece (224) by means of a processing device (264) assigned to the automation module (200), taking into account process information provided to the processing device (264).

7. Method (100) according to claim 6, **characterized in that** the process information is stored in a workpiece database.

8. Method (100) according to one of the preceding claims, **characterized in that** during the selection of a suitable workpiece (224) to be gripped from the workpieces (224) arranged in the raw-part load carrier (212), gripping specifications are additionally taken into account.

9. Method (100) according to one of the preceding claims, **characterized in that** at least one workpiece pallet (222) is arranged in the placement area (220), onto which the gripped workpiece (224) is deposited, wherein, in particular after the workpiece pallet (222) has been completely equipped with workpieces (224), the workpiece pallet (222) is removed from the placement area (220) by means of a transport system, in particular an automated guided transport system.

10. Method (100) according to one of the preceding claims, **characterized in that** when providing, the raw-part load carrier (212) is positioned in the removal area (210) by means of a transport system, in particular an automated guided transport system, and/or by means of a loading system.

11. Automation module (200) having a base portal, a removal area (210), a placement area (220), a robot device (230) arranged on the base portal and having a gripper (232) displaceable into a closed position and into an open position, a camera device (240) arranged on the base portal and directed toward the removal area (210), and a control device (250), wherein the automation module (200) is configured to perform a method (100) according to one of the preceding claims.

12. Automation module (200) according to claim 11, **characterized in that** the base portal has an external first side part (271), an external second side part (272) spaced apart from the first side part (271), and a roof part (274) resting on the first side part (271) and on the second side part (272), wherein the camera device (240) and/or the robot device (230) are arranged on the roof part (274) in such a way that it hangs/they hang into a working space delimited by the first side part (271), the second side part (272), and the roof part (274).

13. Automation module (200) according to claim 12, **characterized by** a third side part (273) arranged between the first side part (271) and the second side part (272), which divides the working space into a first working space region (276) and a second working space region (277), wherein at least one component from the group: removal area (210), placement area (220), robot device (230), camera device (240) is assigned only to the first working space region (276), wherein the automation module (200) further comprises at least one further component assigned only to the second working space region (277) from the group: removal area (210), placement area (220), robot device (230), camera device (240).

## Revendications

1. Procédé (100) de manipulation automatisée de pièces (224) à l'aide d'un module d'automatisation (200), avec un portique de base, une zone de prélèvement (210), une zone de dépose (220), un dispositif robotisé (230) disposé sur le portique de base, présentant une pince (232) déplaçable dans une position de fermeture et dans une position d'ouverture, un dispositif de caméra (240) disposé sur le portique de base, orienté vers la zone de prélèvement (210), et un dispositif de commande (250), dans lequel le procédé (100) présente les étapes suivantes :
a. la fourniture d'un support de charge de pièce brute (212) équipé d'une face supérieure ouverte (213) et de faces extérieures (214) dans la zone de prélèvement (210), dans lequel plusieurs pièces (224) présentant chacune une zone de préhension (226) sont reçues dans le support de charge de pièce brute (212), dans lequel les pièces (224) sont chacune disposées avec leur zone de préhension (226) en direction de la face supérieure (213) et sinon aléatoirement les unes par rapport aux autres et par rapport aux faces extérieures (214),
b. l'acquisition d'une image de position du support de charge de pièce brute (212) et des pièces (224) disposées dans le support de charge de pièce brute (212) au moyen du dispositif de caméra (240),
c. la détermination d'informations de position des pièces (224) les unes par rapport aux autres et par rapport aux faces extérieures (214) en prenant en considération l'image de position, dans lequel les informations de position comprennent des positions individuelles des pièces (224) dans le support de charge de pièce brute (212),
d. la sélection d'une pièce (224) appropriée à saisir parmi les pièces (224) disposées dans le support de charge de pièce brute (212) en prenant en considération les informations de position,
e. la commande du dispositif robotisé (230) au moyen du dispositif de commande (250) en transmettant la position de la pièce (224) sélectionnée, de sorte que la pince (232) soit approchée de la pièce (224), que la pièce (224) soit saisie au moyen de la pince (232) et que la pièce (224) saisie soit prélevée du support de chargement de pièce brute (212),
f. la dépose de la pièce (224) saisie à une position de dépose, qui est sélectionnée dans un groupe de positions de dépose prédéterminées dans la zone de dépose (220), dans lequel les pièces (224) déposées aux positions de dépose sont alignées les unes par rapport aux autres selon une disposition bien ordonnée de manière prédéterminée,
**caractérisé en ce que**
lors de la sélection d'une pièce (224) appropriée à saisir parmi les pièces (224) disposées dans le support de chargement de pièce brute (212), on vérifie pour des pièces (224) individuelles reçues dans le support de chargement de pièce brute (212) s'il existe un risque de perturbation du processus, en ce sens que lors du prélèvement la pièce (224) concernée entrerait en collision avec une autre pièce (224) et/ou avec un côté extérieur (214) du support de chargement de pièce brute (212), au moins jusqu'à ce que le contrôle pour une pièce (224) reçue dans le support de charge de pièce brute (212) révèle qu'il n'y a pas de risque de perturbation du processus pour la pièce (224) contrôlée, après quoi cette pièce (224) est sélectionnée comme pièce (224) à saisir.

2. Procédé (100) selon la revendication 1, **caractérisé en ce que** les étapes consécutives à la fourniture du support de charge de pièce brute (212) sont exécutées de manière répétée pour plusieurs pièces (224) différentes jusqu'à ce que le support de charge de pièce brute (212) ne contienne plus de pièces (224).

3. Procédé (100) selon l'une quelconque des revendications précédentes, **caractérisé en ce que**, lors de la détermination des informations de position des pièces (224), des données de construction des pièces (224) sont également prises en considération en plus de l'image de position.

4. Procédé (100) selon l'une quelconque des revendications précédentes, **caractérisé en ce que** lors de l'acquisition de l'image de position du support de charge de pièce brute (212) et des pièces (224) disposées dans le support de charge de pièce brute (212), des informations de profondeur sont en outre détectées au moyen du dispositif de caméra (240), dans lequel les informations de profondeur sont de préférence déterminées à l'aide d'un nuage de points.

5. Procédé (100) selon l'une quelconque des revendications précédentes, **caractérisé en ce que** la pièce (224) saisie est déplacée au moyen du dispositif robotisé (230) vers un dispositif de détection de code (262) disposé sur le portique de base et un premier code d'identification appliqué sur la pièce (224) saisie est détecté au moyen du dispositif de détection de code (262).

6. Procédé (100) selon l'une quelconque des revendications précédentes, **caractérisé en ce qu'**un second code d'identification est appliqué sur la pièce (224) saisie au moyen d'un dispositif d'usinage (264) associé au module d'automatisation (200) en prenant en considération les informations de processus fournies au dispositif d'usinage (264).

7. Procédé (100) selon la revendication 6, **caractérisé en ce que** les informations de processus sont stockées dans une base de données de pièces .

8. Procédé (100) selon l'une quelconque des revendications précédentes, **caractérisé en ce que** des consignes de saisie sont en outre prises en considération lors de la sélection d'une pièce (224) appropriée à saisir parmi les pièces (224) disposées dans le support de charge de pièce brute (212).

9. Procédé (100) selon l'une quelconque des revendications précédentes, **caractérisé en ce que** dans la zone de dépose (220) est disposée au moins une palette de pièces (222) sur laquelle la pièce (224) saisie est déposée, dans lequel, en particulier après que la palette de pièces (222) a été entièrement remplie de pièces (224), la palette de pièces (222) est retirée de la zone de dépose (220) au moyen d'un système de transport, en particulier sans conducteur.

10. Procédé (100) selon l'une quelconque des revendications précédentes, **caractérisé en ce que** lors de la fourniture le support de chargement de pièces brutes (212) est positionné dans la zone de prélèvement (210) au moyen d'un système de transport, en particulier sans conducteur, et/ou au moyen d'un système d'alimentation.

11. Module d'automatisation (200) avec un portique de base, une zone de prélèvement (210), une zone de dépose (220), un dispositif robotisé (230) disposé sur le portique de base, présentant une pince (232) déplaçable dans une position de fermeture et dans une position d'ouverture, un dispositif de caméra (240) disposé sur le portique de base, orienté vers la zone de prélèvement (210), et un dispositif de commande (250), dans lequel le module d'automatisation (200) est configuré pour mettre en œuvre un procédé (100) selon l'une quelconque des revendications précédentes.

12. Module d'automatisation (200) selon la revendication 11, **caractérisé en ce que** le portique de base présente une première partie latérale (271) extérieure, une deuxième partie latérale (272) extérieure espacée de la première partie latérale (271) et une partie de toit (274) reposant sur la première partie latérale (271) et sur la deuxième partie latérale (272), dans lequel le dispositif de caméra (240) et/ou le dispositif robotisé (230) sont disposés sur la partie de toit (274) de sorte que celui-ci/ceux-ci soient suspendus dans un espace de travail délimité par la première partie latérale (271), la deuxième partie latérale (272) et la partie de toit (274).

13. Module d'automatisation (200) selon la revendication 12, **caractérisé par** une troisième partie latérale (273) disposée entre la première partie latérale (271) et la deuxième partie latérale (272), qui divise l'espace de travail en une première zone d'espace de travail (276) et une seconde zone d'espace de travail (277), dans lequel au moins un composant du groupe : zone de prélèvement (210), zone de dépose (220), dispositif robotisé (230), dispositif de caméra (240) est associé uniquement à la première zone d'espace de travail (276), dans lequel le module d'automatisation (200) présente en outre au moins un autre composant du groupe : zone de prélèvement (210), zone de dépose (220), dispositif robotisé (230), dispositif de caméra (240) associé uniquement à la seconde zone d'espace de travail (277).
